# EUROPEAN PATENT APPLICATION

(11) **EP 4 692 028 A1**
(43) Date of publication of application: **11.02.2026**
(21) Application number: 25181196.4
(22) Date of filing: 05.06.2025
(51) Int. Cl.: C04B 41/48, C04B 41/52, C04B 41/00, C04B 41/89, A47G 19/00, C03C 17/00, C03C 17/34, C08J 7/04, C23C 28/00, C09D 127/06, B05D 1/18, B28B 11/04, C04B 111/00

(54) **TABLEWARE AND UTENSIL AND PREPARATION METHOD THEREOF**

(30) Priority: 07.08.2024 CN 202411079084
(71) Applicant: Jiangmen Zhongxin Home Furnishings Co., Ltd., Jiangmen City, Guangdong 529000 (CN)
(72) Inventor: Zhou, Qingbing, Ruichang City 332216 (CN)
(74) Representative: Valet Patent Services Limited

(57) **Abstract**

This application relates to the field of tableware and discloses tableware, utensil and a preparation method thereof, including a bowl body. The bowl body includes a side wall portion, the side wall portion is connected to a bowl bottom through an arc-shaped portion. A bottom of the bowl bottom is provided with a bowl seat; the side wall portion, arc-shaped portion, and bowl bottom form a first chamber with an upward opening, the bowl seat is in a circular shape to form a second chamber with a downward opening; a dipping layer, which is provided at a bottom of the bowl body and covers the bowl bottom and bowl seat. By performing a dipping treatment on the bowel bottom and bowel seat of the bowl body, a plastic dipping layer is applied to surfaces of the bowl bottom and bowel seat. The dipping layer has characteristics of low thermal conductivity and high friction coefficient, which can hinder heat conduction of the bowl body, thereby achieving effects of anti-scalding, anti-slip, and decorative tableware. Moreover, the plastic dipping process is easy to operate, simple, does not require expensive mechanical equipment, and has relatively low production costs.

## Description

### TECHNICAL FIELD

The present disclosure relates to the field of tableware utensil technologies, and in particular, to tableware, utensil and a preparation method thereof.

### BACKGROUND

Tableware refers to non-edible tools that come into direct contact with food during meals, used to assist in food distribution or ingestion. With the improvement of living standards, there are more and more types of tableware in people's homes, and the materials used are also different.

However, whether it is ceramic tableware, glass tableware, or stainless-steel tableware, they all have a drawback that they are not slip resistant, not heat-resistant, inconvenient to use, and some of them require specific pressing equipment due to the cumbersome process of pressing rubber material onto the bottom of the tableware, which results in relatively high production costs.

### SUMMARY

In response to shortcomings of existing technology, the present invention provides tableware and a preparation method thereof, which solves problems of non-slip and anti-scalding of ceramic, glass, and stainless-steel tableware, and high cost of dipping plastic.

To achieve the above objectives, the present invention is implemented through the following technical solution: tableware, including:
a bowl body, which includes a side wall portion, and the side wall portion is connected to a bowl bottom through an arc-shaped portion; a bottom of the bowl bottom is provided with a bowl seat; the side wall portion, the arc-shaped portion, and the bowl bottom form a first chamber with an upward opening; the bowl seat is in a circular shape to form a second chamber with a downward opening;
a dipping layer, which is provided at a bottom of the bowl body and covers the bowl bottom and the bowl seat.

Preferably, an outer upper of the side wall portion is provided with a rim.

Preferably, two symmetrical side ears are provided along an outer side of the rim.

Preferably, the side wall portion, the arc-shaped portion, the bowl bottom, the bowl seat, the rim, and the side ear are integrally fired and formed.

Preferably, the side wall portion is extended from bottom and top to outward.

Preferably, the dipping layer is attached to the bowl bottom and the bowl seat by a dipping process.

Preferably, a preparation method for the tableware, including the following steps:
S1: making hanging utensils according to type, shape, and size of the tableware, so that a rim or side ears of the tableware stably hang the bowl body;
S2: applying a base gel to the arc-shaped portion and the bowl seat, with a first chamber facing upwards and a second chamber facing downwards, and hanging them on the hanging utensils;
S3: placing the hanging utensils and tableware hanging on the hanging utensils in an oven for baking, with a baking temperature of 110 ° C and a baking time of 0.5-2 minutes;
S4: moving baked tableware onto a tray containing liquid dipping material, controlling the hanging utensils to sink vertically and slowly, allowing the bowl bottom and bowl seat of the tableware to soak in the liquid dipping material, letting it stand for 10-20 seconds, and lifting the hanging utensils to separate the tableware from the liquid dipping material;
S5: putting dipped tableware back into the oven and baking for 1-2 minutes at a temperature of 150 ± 10 ° C; after drying, blowing from a bottom of the tableware upwards with a fan and cooling it down.

Preferably, composition of the base gel in step S2 includes 65 wt% polyvinyl chloride, 15 wt% acetyl tributyl citrate, 10 wt% methyl tin mercaptide, 5 wt% cyclohexanone, and 5 wt% calcium carbonate.

Preferably, the liquid dipping material in step S4 is one of natural rubber polyvinyl chloride (PVC), thermoplastic polyurethanes (TPU), or silicone rubber.

Preferably, material of the tableware is one of polypropylene, ceramic, glass, and stainless steel.

The present invention provides tableware and the preparation method thereof have the following beneficial effects.
1. The present invention involves performing a dipping treatment on the bowl bottom and bowl seat of the bowl body, which covers surfaces of the bowl bottom and bowl seat with a plastic dipping layer. The plastic dipping layer has characteristics of low thermal conductivity and high friction coefficient, which can hinder heat conduction of the bowl body. When the plastic dipping layer encounters a tabletop or palm, it can generate a large frictional force, thereby achieving effects of anti-scalding, anti-slip, and decorative tableware.
2. The plastic dipping process used in the present invention has low operational difficulty, relatively simple procedures, and does not require expensive mechanical equipment, which results in relatively low production costs.

### BRIEF DESCRIPTION OF DRAWINGS

FIG. 1 is a schematic diagram of a three-dimensional structure of the present invention.
FIG. 2 is a schematic diagram of a vertical sectional structure of the present invention.
FIG. 3 is a bottom schematic structural diagram of the present invention.

Numeral reference: 1- bowl body; 101- side wall portion; 102- arc-shaped portion; 103-bowl bottom; 104- first chamber; 2- dipping layer; 3- side ear; 4- rim; 5- bowl seat; 501- second chamber.

### DESCRIPTION OF EMBODIMENTS

Below, the technical solutions in the embodiments of the present invention will be clearly and completely described in combination with the accompanying drawings of the present invention specification. Obviously, the described embodiments are only a part of the embodiments of the present invention, and not all of them. Based on the embodiments of the present invention, all other embodiments obtained by those skilled in the art without creative work are within the protection scope of the present invention.

### Embodiments

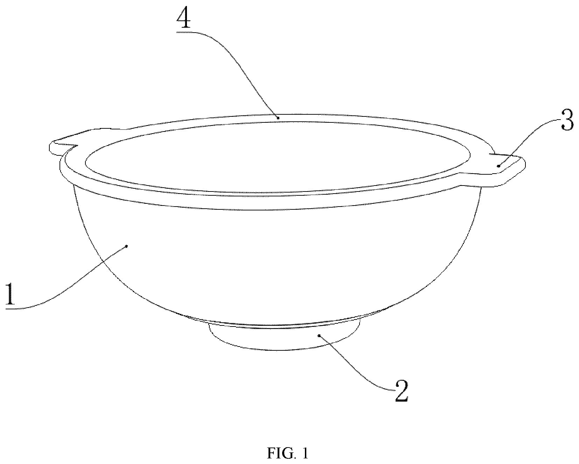

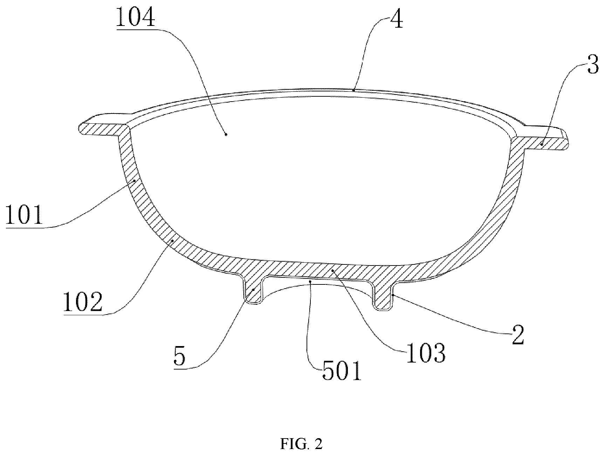

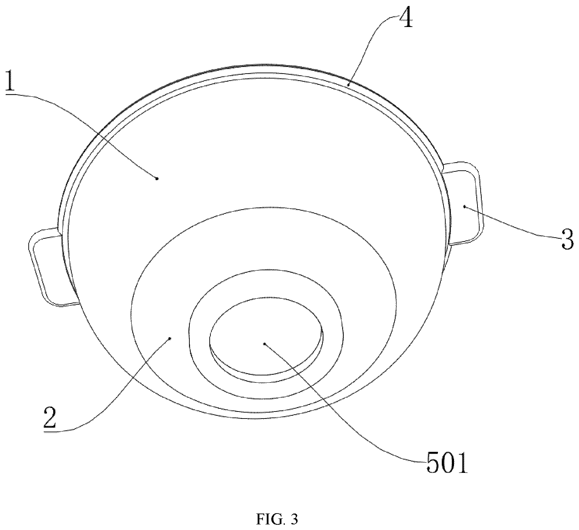

Please refer to FIGs. 1-3. An embodiment of the present invention provides a tableware including a bowl body 1, the bowl body includes a side wall portion 101, the side wall portion 101 is connected to a bowl bottom 103 through an arc-shaped portion 102, the arc-shaped portion 102 rendering a transition between the side wall portion 101 and the bowl bottom 103 to be smoother, rendering the tableware easier to clean and more conducive to scooping food inside the tableware. A bottom of the bowl bottom 103 is provided with a bowl seat 5. The side wall portion 101, the arc-shaped portion 102, and the bowl bottom 103 form a first chamber 104 with an upward opening. The first chamber 104 is configured to hold food, and the bowl seat 5 is in a circular shape to form a second chamber 501 with a downward opening. The second chamber 501 is configured to support the bowl body 1.

The tableware further includes a dipping layer 2 that is provided at a bottom of the bowl body 1 and covers the bowl bottom 103 and the bowl seat 5. In this embodiment, the material of the dipping layer 2 is natural rubber PVC, TPU, silicone rubber, the dipping layer 2 with the above-mentioned material has characteristics of low thermal conductivity and high friction coefficient, which can hinder heat conduction of the bowl body. When the dipping layer 2 abuts against a desktop or palm, it can generate a large frictional force, thereby achieving the effect of anti-scalding and anti-slipping.

Or color of the dipping layer 2 can be changed by adding a coloring agent, allowing the tableware to have both anti-scalding and anti-slip effects and serving as decorative tableware.

In this embodiment, a rim 4 is provided on an outer upper of the bowl body 1, and the rim 4 has a certain height, which can block an outflow of liquid when the bowl body 1 is filled with liquid, prevent food or soup from spilling, and maintain the cleanliness of the desktop or surrounding environment. Two symmetrical side ears 3 are provided on an outer side of the rim 4, which provides a convenient portion for fingers to grip, allowing people to hold the bowl more stably and conveniently. At the same time, the side ears 3 also support the bowl body 1 during dipping treatment.

In this embodiment, the side wall portion 101, the arc-shaped portion 102, the bowl bottom 103, the bowl seat 5, the rim 4, and the side ear 3 are integrally fired and formed. The heat generated by the integrally formed material can be quickly dissipated into the air through the rim 4 and the side ear 3, thereby reducing the temperature of the food or beverage inside the bowl and preventing people from being burned when eating or drinking. The side wall portion 101 is extended from bottom and top to outward, and a bowl mouth height or shape of the side wall portion 101 can serve as a visual identifier to help people roughly judge the capacity of the bowl body 1 and control the amount of food or liquid during use. The dipping layer 2 is attached to the bowl bottom 103 and the bowl seat 5 by a dipping process.

The following are steps of the dipping process for the tableware:
S1: making hanging utensils according to type, shape, and size of the tableware, so that a rim 4 or side ears 3 of the tableware stably hang the bowl body 1.
S2: Applying a base gel

Applying the base gel to the arc-shaped portion 102, the bowl bottom 103, and the bowl seat 5. Specifically, composition of the base gel includes 65 wt% polyvinyl chloride, 15 wt% acetyl tributyl citrate, as a plasticizer, 10 wt% methyl tin mercaptide as a stabilizer, 5 wt% cyclohexanone, as a solvent, and 5 wt% calcium carbonate, as a filler. Then, the first chamber 104 is faced upwards and the second chamber 501 is faced downwards, and the tableware is hung on the hanging utensils.

Specifically, this base gel is in liquid form and is mainly used as a bonding agent between PVC materials and other plastics, ceramics, glass, stainless steel, and other materials. Main components of this PVC gel include the following:
polyvinyl chloride, a main component of the PVC gel is polyvinyl chloride resin, which is the basic material of PVC gel and can provide adhesive strength and durability;
plasticizer, the PVC gel contains the plasticizer, which can increase the softness and ductility of PVC materials, thereby improving the adhesive properties of the gel; common plasticizers include ester plasticizers, epoxy plasticizers, and aliphatic plasticizers;
stabilizer, the PVC gel further contains the stabilizer, which can improve the stability of PVC materials and prevent decomposition and aging during processing and use; common stabilizers include organotin stabilizers, organic lead stabilizers, and calcium zinc stabilizers;
solvent, the solvent can dissolve PVC resin and plasticizer, allowing them to mix thoroughly and form a glue; common solvents include acetone, methanol, dimethyl, etc.;
filler, the filler can change the fluidity and viscosity of glue, and improve the heat and chemical resistance; common fillers include calcium silicate, calcium sulfate, and talc powder.

### S3: Baking

Placing the hanging utensils and tableware hanging on the hanging utensils in an oven for baking at a temperature of 110 ± 15 °C for 0.5-2 minutes. To verify the effect of different baking temperatures and times on the dipping treatment effect, the following experiments were conducted and experimental data was recorded in Table 1.

**Table 1**

| Experiment number | Baking temperature (°C) | Baking time (min) | Adhesion of dipping layer (N/cm²) | Appearance |
|---|---|---|---|---|
| 1 | 95 | 0.5 | 2.5 | slight bubbles on surfaces |
| 2 | 95 | 1.0 | 3.0 | relatively smooth surfaces with a small amount of fine particles |
| 3 | 95 | 1.5 | 3.2 | smooth surfaces without obvious defects |
| 4 | 95 | 2.0 | 3.3 | smooth surfaces without obvious defects |
| 5 | 100 | 0.5 | 2.8 | smooth surfaces without obvious defects |
| 6 | 100 | 1.0 | 3.5 | smooth surfaces without obvious defects |
| 7 | 100 | 1.5 | 3.6 | smooth surfaces without obvious defects |
| 8 | 100 | 2.0 | 3.7 | smooth surfaces without obvious defects |
| 9 | 110 | 0.5 | 4.0 | smooth surfaces without obvious defects |
| 10 | 110 | 1.0 | 4.2 | smooth surfaces without obvious defects |
| 11 | 110 | 1.5 | 4.3 | smooth surfaces without obvious defects |
| 12 | 110 | 2.0 | 4.5 | smooth surfaces without obvious defects |
| 13 | 125 | 0.5 | 3.8 | slight discoloration on surfaces |
| 14 | 125 | 1.0 | 4.0 | slight discoloration and a small amount of fine particles |
| 15 | 125 | 1.5 | 4.1 | slight discoloration and a small amount of fine particles |
| 16 | 125 | 2.0 | 4.2 | slight discoloration and a small amount of fine particles |

From Table 1, it can be seen that when the baking temperature is around 110 ° C and the baking time is 1-2 minutes, the adhesion of the dipping layer is good, and the appearance is also the best.

### S4: Dipping

Moving baked tableware onto a tray containing liquid dipping material, controlling the hanging utensils to sink vertically and slowly, allowing the bowl bottom 103 and bowl seat 5 of the tableware to soak in the liquid dipping material, letting it stand for 10-20 seconds, lifting the hanging utensils to separate the tableware from the liquid dipping material. In this embodiment, the liquid dipping material can be one of natural rubber PVC, TPU, silicone rubber, different liquid impregnated materials have different performance characteristics. Comparative experiments were conducted, and the experimental data was recorded in Table 2.

**Table 2**

| Liquid plastic dipping material | Anti-slip performance (static friction coefficient) | Thermal insulation performance (thermal conductivity flow rate)) W/(m·k) | Wear resistance performance (wear rate%) |
|---|---|---|---|
| Natural rubber | 0.75 | 0.15 | 1.2 |
| PVC | 0.70 | 0.18 | 1.5 |
| TPU | 0.80 | 0.13 | 0.8 |
| Silicon rubber | 0.65 | 0.12 | 0.5 |

From Table 2, it can be seen that TPU, as the liquid immersion material, exhibits excellent anti-slip performance, thermal insulation performance, and wear resistance in tableware.

### S5: Baking and cooling

Putting dipped tableware back into the oven and baking for 1-2 minutes at a temperature of 150 ± 10 °C, after drying, blowing from the bottom of the tableware upwards with a fan and cooling it down.

Although the embodiments of the present invention have been shown and described, it will be understood by those skilled in the art that various changes, modifications, substitutions, and variations can be made to these embodiments without departing from the principles and spirit of the present invention. The scope of the present invention is limited by the appended claims and their equivalents.

## Claims

1. A tableware, comprising:
a bowl body (1), which comprises a side wall portion (101), and the side wall portion (101) is connected to a bowl bottom (103) through an arc-shaped portion (102); a bottom of the bowl bottom (103) is provided with a bowl seat (5); the side wall portion (101), the arc-shaped portion (102), and the bowl bottom (103) form a first chamber (104) with an upward opening; the bowl seat (5) is in a circular shape to form a second chamber (501) with a downward opening;
a dipping layer (2), which is provided at a bottom of the bowl body (1) and covers the bowl bottom (103) and the bowl seat (5).

2. The tableware according to claim **1,** wherein an outer upper of the side wall portion (101) is provided with a rim (4).

3. The tableware according to claim 2, wherein two symmetrical side ears (3) are provided along an outer side of the rim (4).

4. The tableware according to claim 3, wherein the side wall portion (101), the arc-shaped portion (102), the bowl bottom (103), the bowl seat (5), the rim (4), and the side ear (3) are integrally fired and formed.

5. The tableware according to claim 1, wherein the side wall portion (101) is extended from bottom and top to outward.

6. The tableware according to claim 1, wherein the dipping layer (2) is attached to the bowl bottom (103) and the bowl seat (5) by a dipping process.

7. A preparation method for the tableware according to one of claims 1-6, comprising the following steps:
S1: making hanging utensils according to type, shape, and size of the tableware, so that a rim (4) or side ears (3) of the tableware stably hang the bowl body (1);
S2: applying a base gel to the arc-shaped portion (102) and the bowl seat (5), with a first chamber (104) facing upwards and a second chamber (501) facing downwards, and hanging them on the hanging utensils;
S3: placing the hanging utensils and tableware hanging on the hanging utensils in an oven for baking, with a baking temperature of 110 °C and a baking time of 0.5-2 minutes;
S4: moving baked tableware onto a tray containing liquid dipping material, controlling the hanging utensils to sink vertically and slowly, allowing the bowl bottom (103) and bowl seat (5) of the tableware to soak in the liquid dipping material, letting it stand for 10-20 seconds, and lifting the hanging utensils to separate the tableware from the liquid dipping material;
S5: putting dipped tableware back into the oven and baking for 1-2 minutes at a temperature of 150 ± 10 °C; after drying, blowing from a bottom of the tableware upwards with a fan and cooling it down.

8. The preparation method for the tableware according to claim 7, wherein composition of the base gel in step S2 comprises 65 wt% polyvinyl chloride, 15 wt% acetyl tributyl citrate, 10 wt% methyl tin mercaptide, 5 wt% cyclohexanone, and 5 wt% calcium carbonate.

9. The preparation method for the tableware according to claim 7, wherein the liquid dipping material in step S4 is one of natural rubber PVC, TPU, or silicone rubber.

10. The preparation method for the tableware according to claim 7, material of the tableware is one of polypropylene, ceramic, glass, and stainless steel.
